# EUROPÄISCHE PATENTSCHRIFT

(11) **EP 0 720 538 B1**
(45) Veröffentlichungstag und Bekanntmachung des Hinweises auf die Patenterteilung: **05.03.1997**
(21) Anmeldenummer: 94927554.9
(22) Anmeldetag: 03.09.1994
(51) Int. Cl.: B60L 3/10

(54) **VERFAHREN ZUR REGELUNG DER ANTRIEBS- UND/ODER BREMSKRAFT DER RÄDER EINES FAHRZEUGES AUF OPTIMALEN KRAFTSCHLUSS**
PROCESS FOR REGULATING THE DRIVING AND/OR BRAKING FORCE ON THE WHEELS OF A VEHICULE TO ACHIEVE OPTIMAL ADHESION
PROCEDE DE REGULATION DE LA FORCE MOTRICE ET/OU DE FREINAGE EXERCEE SUR LES ROUES D'UN VEHICULE POUR L'OBTENTION D'UNE ADHERENCE OPTIMALE

(30) Priorität: 24.09.1993 DE 4333281
(43) Veröffentlichungstag der Anmeldung: 10.07.1996
(73) Patentinhaber: ABB Daimler-Benz Transportation (Deutschland) GmbH, 16761 Hennigsdorf (DE)
(72) Erfinder: HAHN, Karl, D-10711 Berlin (DE)
(74) Vertreter: Hamilton, Eberhard
(86) Internationale Anmeldenummer: EP9402937
(87) Internationale Veröffentlichungsnummer: WO9508451

(56) Entgegenhaltungen:
- EP-A- 0 141 157
- DE-C- 3 407 309
- DE-C- 3 929 497

## Beschreibung

Die Erfindung betrifft ein Verfahren zur Regelung der Antriebs- und/oder Bremskraft der Räder eines Fahrzeuges, insbesondere der Treibradsätze eines laufachsenlosen Schienentriebfahrzeuges auf optimalen Kraftschluß, wie es im übrigen im Oberbegriff des Anspruches 1 näher definiert ist.

Die Leistungselektronik ermöglicht heute stufenlos regelbare Drehstrom-, Gleichstrom- und Mischstromantriebe, die ein pendelndes Führen der Räder/Radsätze von Schienentriebfahrzeugen in Bereichen eng um das jeweilige Kraftschlußmaximum der Kraftschluß-Schlupfcharakteristik des Rad/Schiene-Kontaktes gestatten.

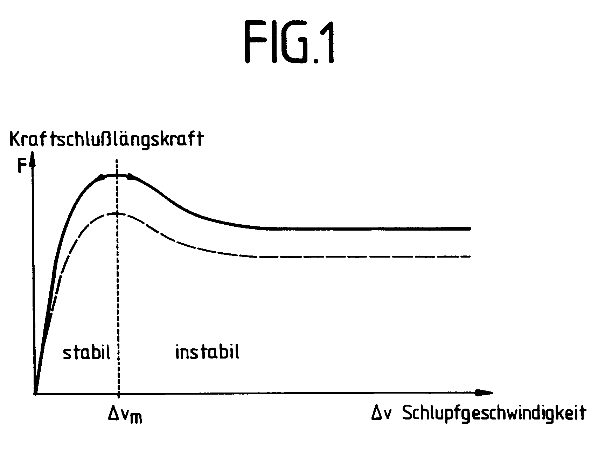

Fig. 1 zeigt eine typische Kraftschluß-Schlupf-Kurve mit unterscheidbaren Schlupfbereichen, wobei das Gebiet links des Maximums als stabil und rechts davon als instabil gilt. Für ein pendelndes Führen der Räder/Radsätze um das Maximum der Vollstrichkurve (entsprechend den durch Pfeile markierten Bereichen in Fig. 1) sind verschiedene Verfahren bekanntgeworden, die keine Messung der absoluten Geschwindigkeit über Grund (z.B. mittels Laufachse oder Radar etc.) mehr benötigen, sondern mit den gemessenen Drehzahlen der Treibradsätze auskommen. So erfolgt in einem bekannten Verfahren z.B. ein fortgesetzes Steigern und wieder Zurücknehmen der Antriebs-/Bremskraft, wobei das Überschreiten des Maximums der Kraftschluß-Schlupf-Kurve durch eine einsetzende stärkere Beschleunigung erkannt wird (z.B. DE-PS 34 07 309).

Bei einem anderen Verfahren dieser Art wird ein Steigern oder Zurücknehmen einer eingeprägten Drehzahl bewirkt und das Überschreiten des Maximums der Kraftschluß-Schlupf-Kurve an einem Absinken der Antriebs-/Bremskraft erkannt (z.B. DE-PS 39 29 497).

Gemeinsam ist diesen Verfahren, den Schlupf nach herrschender Erkenntnis möglichst klein zu halten, um dadurch größte Zugkraftausnutzung zu erreichen.

Die Praxis beweist jedoch, daß der so erzielbare Kleinst-Schlupf keine Zugkraftverbesserung gegenüber größeren Schlupfwerten bringt, mit denen man vgl. verschiedener Literatur die besten Zugkräfte lt. Messungen erreicht. Im Gegenteil, die Zugkraftübertragung wird zeitweilig sogar verschlechtert, wobei sich die Zugkraft auf den gestrichelten Kurvenverlauf in Fig. 1 absenkt.

Andererseits stellt erhöhter zulässiger Schlupf die Genauigkeit der Messung der absoluten Geschwindigkeit infrage.

Der Erfindung liegt eine durch die Praxis erhärtete Theorie zugrunde, nach der durch gelegentliches Fahren mit größerem Schlupf im instabilen Bereich dem Anschein nach eine Verbesserung der gesamten Kraftschluß-Schlupf-Charakteristik zu höheren Kräften hin stattfindet, was offenbar durch Veränderung der kontaktgebenden Radoberflächen erfolgt. Die Zugkraftübertragung folgt dann wieder der Vollstrichkurve in Fig. 1.

Demnach reicht offenbar der bisher angestrebte geringe Schlupf, der eintritt, wenn man im Kraftschlußmaximum fährt, ersichtlich nicht aus, um die Radlaufflächen "griffig" zu halten, sondern führt im Gegenteil - wie z.B. reines Rollen - zu einem Poliereffekt der Radreifenoberflächen.

Das verschlechtert insbesondere bei Vorhandensein von Fremdschichten (Wasser etc.) den Kraftschlußwert erheblich. Praktische Versuche ergaben bei den genannten bekannten hochgenauen Verfahren zuweilen unerklärliche Kraftschlußeinbrüche, zumindest auf nassen Schienen, wodurch dann deutlich weniger Zugkraft ausgeübt werden konnte, als im Betrieb mit größerem Radschlupf.

Um alle Radsätze generell auf einen gewollten Schlupf regeln zu können, braucht man den Meßwert der Geschwindigkeit über Grund. Dies kann z.B. durch Laufachsen oder Radargeräte geschehen. Lokomotiven haben jedoch heute keine Laufachsen mehr, Radargeräte sind störanfällig und wartungsaufwendig.

Es sind Verfahren bekanntgeworden, die ohne einen echten Geschwindigkeitsmeßwert über Grund eine intermittierende Schlupfregelung verwenden. Hierzu wird aus den Achsdrehzahlen und der hieraus ermittelten Beschleunigung eine fiktive Geschwindigkeit über Grund errechnet, die dann als Referenz für die Schlupfregelung Verwendung findet. Voraussetzung hierfür ist, daß in nicht zu großen Abständen an wenigstens einem der Treibradsätze kurzzeitig die Aptriebskraft so weitgehend reduziert wird, daß sie mit Sicherheit wieder in den Mikroschlupf im stabilen Schlupfbereich gesteuert wird. Mit diesem Radsatz wird dann die fiktive Geschwindigkeit, die stets etwas abdriftet, wieder auf richtigen Wert nachgestellt. Man muß allerdings hierbei in Abständen wiederkehrend den weitgehenden Verlust der Antriebskraft mindestens dieses Treibradsatzes für eine Zeit mindestens solange in Kauf nehmen, bis sie aus dem Schlupf wieder fast in den Rollzustand zurückgekehrt ist. In Lokomotiven, in denen die Motoren nur gruppenweise zu zweit gemeinsam gesteuert werden können, wären sogar zwei Treibradsätze hiervon betroffen, so daß z.B. eine vierachsige Lokomotive kurzzeitig um fast 50 % ihrer Zugkraft reduziert werden muß.

Aufgabe der Erfindung ist es, die eingangs genannten Verfahren, mit denen man ohne den Meßwert der Geschwindigkeit über Grund jeden Radsatz an der Kraftschlußgrenze bei kleinstmöglichem Schlupf führen kann, für eine Verbesserung des Rad-/Schiene-Kontaktes durch gezielt höheren Radschlupf geeignet zu machen.

Der Vorteil, ohne direkte Messung einen für signaltechnische Zwecke genügend genauen Wert der absoluten Geschwindigkeit zu haben (bisher infolge des kleinen Radschlupfes), soll dabei erhalten bleiben, ebenso die Sicherheit vor unkontrolliertem Radschlupf ( Allachsschleudern).

Diese Aufgabe wird für das eingangs genannte Verfahren mit den kennzeichnenden Merkmalen des Anspruches 1 gelöst. Vorteilhafte Ausgestaltungen sind den Unteransprüchen entnehmbar.

Die Erfindung nutzt den Effekt, daß es zur Aufrechterhaltung eines besseren Kraftschlusses offenbar nicht erforderlich ist, den erwähnten erhöhten Radschlupf ununterbrochen aufrecht zu erhalten. Da es viele Sekunden bis zu einigen Minuten dauert, bis ein aufgerauhter Radsatz - - nach einer Fahrt mit erhöhtem Schlupf wieder zurück auf den kleineren Optimalschlupf auf der Kraftschluß-/Schlupf-Charakteristik gefahren -- wieder geglättet ist, kann man diesen Radsatz in dieser Zeit als Geschwindigkeitsnormal heranziehen und die übrigen Radsätze mit großem Schlupf fahren lassen. Ein zeitweise mit dem (kleineren) Optimalschlupf gefahrener Radsatz hat in dieser Zeit sogar den höchsten Kraftschluß, weil er dann auf dem höchsten Niveau der durch den vorherigen Betrieb mit großem Schlupf angehobenen Kraftschlußcharakteristik (Vollstrichkurve in Fig. 1) arbeitet, während die Radsätze im Makroschlupf auf dem fallenden Ast der Characteristik mit nicht mehr maximalem Kraftschluß (gestrichelter Kurvenverlauf in Fig. 1) fahren.

Mit dem erfindungsgemäßen Verfahren ergeben sich damit
folgende Vorteile:

Die durch erhöhten Radschlupf noch erzielbaren Zugkraftgewinne sind voll ausschöpfbar. Eine direkte Erfassung der Geschwindigkeit über Grund ist hierbei nicht notwendig, trotzdem ist nach wie vor aus den Achsdrehzahlen eine hinreichend genaue Geschwindigkeitsmessung möglich. Der Betrieb mit dem erhöhten Schlupf kann frei wählbar eingerichtet werden. In den Fällen, wo der zusätzliche Zugkraftgewinn für eine Fahrplaneinhaltung nicht notwendig ist (was allerdings häufig der Fall sein wird), kann mit dem kleinen Optimalschlupf wie bisher gefahren werden. Diese Betriebsweise führt dann zu einer im Verhältnis zur erzielbaren Zugkraftreserve bisher nicht möglichen Minimierung des Radverschleißes.

Der Übergang in den Schlupfbetrieb kann vom Triebfahrzeugführer frei gewählt oder halbautomatisch etwa dadurch erfolgen, daß er durch Vorgabe von 100 % Zugkraft oder etwas weniger (beispielsweise < 95%) entscheiden kann, ob mit oder großen Schlupf gefahren werden soll.

Durch längeres Verweilen oder dauerndes Betreiben des ersten Radsatzes im Zustand größeren Schlupfes und/oder Einstellung eines besonders großen Schlupfes an diesem Radsatz kann dessen bekannte Putzwirkung auf nassen Schienen ausgenutzt werden.

Besonders vorteilhaft kann das erfindungsgemäße Verfahren angewendet werden, wenn alle Radsätze mit einem der bekannten Verfahren zur Regelung an der Kraftschlußgrenze ohne Erfassung der Geschwindigkeit über Grund ausgerüstet werden und zusätzlich eine nur wenig aufwendige Einrichtung zur Umschaltung in den Betrieb mit geregeltem größeren Schlupf erhalten.

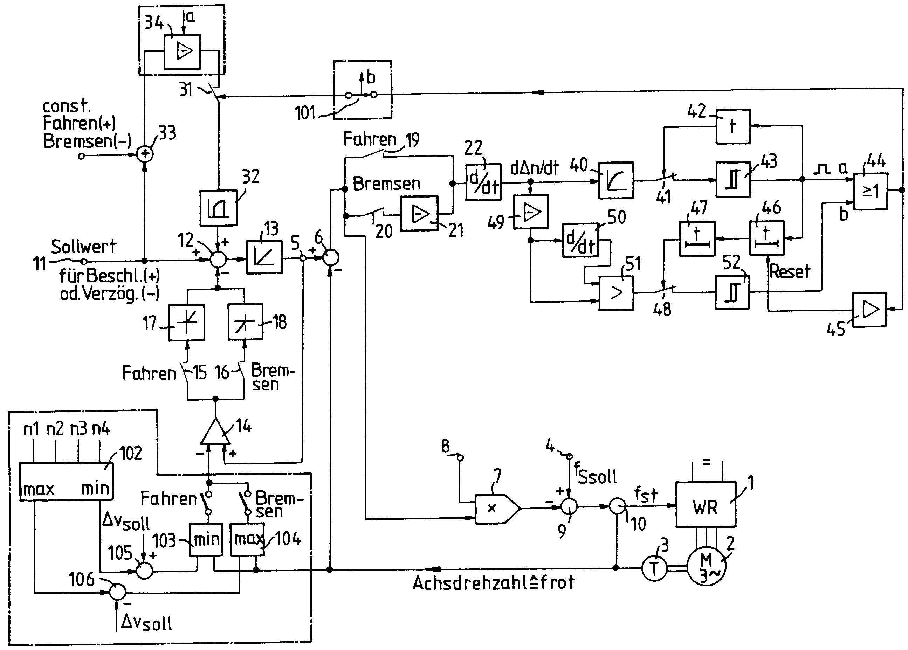

Ein Bespiel hierfür ist in der Fig. 2 dargestellt. Diese zeigt eine Anwendung der Erfindung auf ein Verfahren, wie es in der bereits genannten DE-PS 34 07 309 aufgezeigt ist. Ergänzende Anordnungen, wie sie z.B. aus der DE-PS 38 37 908 oder DE-PS 39 02 846 oder DE-PS 42 24 581 hervorgehen,
haben auf die Wirksamkeit des erfindungsgemäßen Verfahrens keinen Einfluß.

Die Fig. 2 zeigt in einem Blockschaltbild die Regelung eines Treibradsatzes mit einem wechselrichtergespeisten Drehstromfahrmotor. In einer Lokomotive mit Einzelachssteuerung hat jeder einzelne Treibradsatz eine solche vollständige Anordnung. In Lokomotiven mit Gruppensteuerung, beispielsweise Parallelschaltung der beiden Motore eines Drehgestells, ist eine Anordnung gemäß der Fig. 2 beiden Radsätzen des Drehgestells gemeinsam zuzuordnen, wobei als Ist-Drehzahl die Drehzahl eines der Radsätze oder der Mittelwert beider verwendet wird.

In der Fig.2ist mit 1 ein Wechselrichter bezeichnet, der einen Drehstromfahrmotor 2 speist. Die Achsdrehzahl wird z.B. von einer Tachometermaschine 3 (oder einem Drehimpulsgeber mit Auswerter) erfaßt. An einen Eingang 4 ist der in der Antriebsregelung gebildete abgeleitete Sollwert für die Schlupffrequenz fsₛₒₗₗ des Motors gelegt. Am Anschluß 5 liegt anstelle einer echt gemessenen Fahrzeuggeschwindigkeit über Grund eine Pseudo-Laufachsdrehzahl an, die in einem Differenzbildner 6 mit der gemessenen Achsdrehzahl aus der Tachometermaschine 3 verglichen wird. Die im Differenzbildner 6 ermittelte Drehzahldifferenz wird in einen Multiplizierer 7 mit einem geeigneten, am Anschluß 8 eingegebenen konstanten oder von Geschwindigkeit und/oder zugkraftabhängigen Faktor bewertet. Der erhaltene Wert wird in einer Subtraktionsstelle 9 vom Sollwert der Motorschlupffrequenz fsₛₒₗₗ abgezogen und das Ergebnis als Drehmomentsollwert verwendet. In einem Summierer 10 wird als Summe aus Achsdrehzahl fᵣₒₜ und gewünschter Motorschlupffrequenz die Wechselrichterfrequenz als Ständerfrequenz des Fahrmotors 2 gebildet.

Dem Anschluß 11 wird der Sollwert der erwarteten Beschleunigung bzw. Verzögerung zugeführt, abgeleitet aus der Zug- bzw. Bremskraft und der Fahrzeugmasse. In Lokomotiven ist hierfür die Anhängelast zu berücksichtigen,
was mit einer automatischen Adaptierung erfolgen kann. Dieser Sollwert wird in einem Integrator 13, der als Pseudolaufachse fungiert, zu einem Drehzahlwert integriert.

Der Integrator 13 ist dabei so eingestellt, daß er um einen kleinen Toleranzbereich schneller integriert, als es der wahren Fahrzeugbeschleunigung entspricht, so daß die Pseudo-Laufachsdrehzahl der Fahrzeug-Istgeschwindigkeit langsam davonlaufen würde. Der Integrator 13 erhält deshalb eine zusätzliche Rückführung über einen Komparator 14, die Schaltstellen 15 und 16, sowie die Einweggleichrichter 17, 18 oder andere, jeweils nur Signale einer Polarität durchlassende Anordnungen, sowie ein Additionsglied 12. im Komparator 14 wird der Integratorausgang, d.h. die Pseudo-Laufachsdrehzahl mit der Drehzahl einer wirklichen Achse verglichen. Positive Differenz (d.h. die Pseudolaufachse läuft schneller) wird nur im Betriebszustand "Fahren" (15 geschlossen) über Einweggleichrichter 17 an den Integrator 13 gegeben und steuert dann die Pseudolaufachse herunter, bis diese mit der Drehzahl der wirklichen Achse übereinstimmt. Negative Differenz (d.h. Pseudolaufachse läuft langsamer) wird im Zustand "Bremsen" (16 geschlossen) über Einweggleichrichter 18 an den Integrator 13 gegeben und steuert dann die Pseudolaufachse aufwärts, bis Übereinstimmung mit der wirklichen Achse vorliegt. Hierdurch wird der Integratorausgang, solange die wirkliche Achse rollt, nicht mehr beschleunigt oder verzögert als das Fahrzeug. Die Drehzahlwerte stimmen überein, und am Differenzbildner 6 treten keine Drehzahldifferenzen auf.

Bei auftretendem Radschlupf wird im Zustand "Fahren" die Achse letztlich stärker beschleunigen als das Fahrzeug oder der Integrator. Der Integrator 13 kann jetzt nicht über die Rückführung mitgenommen werden, weil Einweggleichrichter 17 ein Signal negativer Polarität nicht durchläßt. Es entsteht am Differenzbildner 6 eine Drehzahldifferenz, wie zwischen Treibachse und einer echten Laufachse.

Beim Bremsen kehrt sich die Polarität der Differenz um, wodurch das Rückführungssignal über 16, 18 geleitet wird. Das an dem Differenzbildner 6 auftretende Drehzahldifferenzsignal steuert dann, wie zu den Bezugszeichen 1 bis 10 beschrieben, das Drehmoment und damit die Zug-/bzw. Bremskraft des Fahrmotors.

Jetzt hat z.B. die Pseudo-Laufachsdrehzahl bereits einen Wert erreicht, der nicht mehr die Geschwindigkeit über Grund, sondern dem einer sich bereits mit einem Schlupf auf der Schiene drehenden Achse entspricht, wie er zur Übertragung der maximalen möglichen Zugkraft notwendig ist. Während der Entstehung dieses Schlupfes, d.h. vom reinen Rollen der Treibachse an wird diese bereits kaum meßbar stärker beschleunigt als das Fahrzeug. Der Integrator 13 kann bis dahin noch der Achsdrehzahl folgen. Eine stärkere Beschleunigung der Treibachse setzt erst dann ein, wenn der Schlupf des maximalen Reibwertes überschritten wird.

Ohne weitere Maßnahmen würde nun der Pseudo-Laufachsintegrator 13 frei weiterlaufen, wobei die Pseudolaufachse auch allmählich gegenüber dem Fahrzeug immer schneller wird. Die Treibachse würde ebenfalls immer größeren Schlupf annehmen und schließlich ins Schleudern geraten.

Um dies zu verhindern, ist die Regelung so ausgelegt, daß der Radsatz oder die Radsatzgruppe durch Reduzierung der Antriebskraft des Motors (F_{Mot}) (oder Bremskraft beim Bremsen) über das Kraftschlußmaximum hinweg in den stabilen Schlupfbereich zurückgeführt wird. Hierbei bilden die Elemente 19, 20, 21 eine Umpolvorrichtung, die im Bremsbetrieb die Polarität des Drehzahldifferenzsignals tauscht. Mit 22 ist eine Differenziervorrichtung bezeichnet, die die erste zeitliche Ableitung des Drehzahldifferenzsignals dΔn/dt bildet. Mit 40 ist ein Verzögerungsglied 1. Ordnung bezeichnet, das den Anstieg des Ausgangssignals von Differenziervorrichtung 22 etwas verflacht. Der Ausgang des Verzögerungsgliedes 40 ist des weiteren über einen elektronisch betätigten Schalter 41 mit Ruhekontakt auf eine Grenzwertstufe 43 geführt, die ein binäres Signal auf ein ODER-Gatter 44 ausgibt. Eine Rückführung führt auf ein Zeitglied 42, das nach Erreichen einer Ansprechverzögerung den Schalter 41 öffnet und nach Ablauf einer weiteren Verzögerungszeit diesen wieder schließt. Damit werden im Sinne einer Prozeßüberwachung unerwünscht lange Signale ausgeschlossen. Der Ausgang des ODER-Gatters 44 wirkt auf einen Schalter 31 und über einen Invertierer 45 auf den Reset-Eingang eines 1. Zeitgliedes 46 mit Ausschaltverzögerung, das vom Ausgang der Grenzwertstufe 43 gesetzt worden ist. Das 1. Zeitglied 46 stößt ein 2. Zeitglied 47 an, das eine Einschaltverzögerung aufweist. Über das 2. Zeitglied 47 wird ein weiterer Schalter 48 betätigt, der den Ausgang einer Maximalwertauswahlstufe 51 an einem Schmitt-Trigger 52 legt und diesen auslöst, wodurch ein weiteres Signal auf ODER-Gatter 44 gelangen kann. Die Maximalwertauswahlstufe 51 erhält von der Differenziervorrichtung 22 und einem nachgeschalteten Invertierer 49 einerseits ein direktes Eingangssignal und andererseits über ein 2. Differenzierglied 50 ein zusätzlich differenziertes Eingangssignal. Die Maximalwertauswahlstufe 51 läßt dabei nur das Signal mit dem größeren Wert von beiden durch.

Wenn am Differenzbildnet 6 eine Drehzahldifferenz erscheint, haben die Räder, wie vorstehend beschrieben, den Schlupf auf den Schienen überschritten, der die größte Kraftübertragung ermöglicht. Sie laufen in den instabilen Schlupfbereich ein, d.h. mit noch größer werdendem Schlupf wird der Haftwert wieder kleiner. Der jetzt größer werdende Drehmomentüberschuß beschleunigt die im Vergleich zur Fahrzeugmasse nur kleine rotierende Masse des Radsatzes mit Fahrmotor relativ schnell. Der Anstieg der Drehzahldifferenz wird von der Differenziervorrichtung 22 erfaßt und bringt über das Verzögerungsglied 40 (zur Ausfilterung kurzzeitiger Störungen), und den Schalter 41 die Grenzwertstufe 43 zum Ansprechen. Deren Ausgangssignal betätigt über das ODER-Gatter 44 den Schalter 31, wodurch ein aus dem erwarteten Beschleunigungswert vom Anschluß 11 und einer dazu addierten Konstanten (Additionspunkt 33) gebildetes und im Invertierer 34 invertiertes Signal über die Zeitstufe 32 und das Additionsglied 12 am Eingang des integrators 13 wirksam wird. Die Zeitstufe 32 läßt einen Teil des Signales sofort passieren, den Rest mit einer Verzögerung erster Ordnung bis zur vollen Höhe ansteigen. Eine Abfallverzögerung für das Signal enthält Zeitstufe 32 nicht, wie symbolisch angedeutet. Der Integrator 13 wird dadurch langsamer und beginnt, sobald das Zusatzsignal das direkte Signal übersteigt, in umgekehrter Richtung zu integrieren.

Die Pseudo-Laufachsdrehzahl wird damit kleiner. Hierdurch steigt zwar die Drehzahldifferenz am Differenzbildner 6 zunächst noch schneller an, gleichzeitig wird jedoch mit dem größeren Drehzahldifferenzsignal auch das Drehmoment des Fahrmotors stärker reduziert. Die weitere Beschleunigung des Radsatzes hört dadurch auf, der Radsatz beginnt sich wieder zu "fangen", d.h. in den stabilen Schlupfbereich zurückzulaufen. Da sich hierbei die Radsatzdrehzahl wieder der Pseudo-Laufachsdrehzahl nähert, wird auch das Drehzahldifferenzsignal am Differenzbildner 6 wieder kleiner. Die Abwärtssteuerung des Integrators 13 über den Schalter 31 muß jedoch noch solange aufrechterhalten werden, bis der Radsatz wieden den stabilen Schlupfbereich erreicht hat, d.h. über das Haftwert-Maximum der Haftwert/Schlupfkurve zurückgelaufen ist. Andererseits würde das System im instabilen Bereich verbleiben und schließlich doch ins Schleudern geraten.

Diesem Zweck dient der Schmitt-Trigger 52, der durch den Invertierer 49 für negatives d( Δ n)/dt , also Verringerung des Drehzahldifferenzsignals empfindlich ist und sein Signal ebenfalls an das ODER-Gatter 44 abgibt. Er wird nach Ansprechen der Grenzwertstufe 43 nach Ablauf des 2. Zeitgliedes 47 und des weiteren Schalters 48 wirksam. Über das 2. Differenzierglied 50 erhält der Schmitt-Trigger 52 mittels der Maximalwertauswahlstufe 51 ein zusätzliches voreilendes Signal, wodurch er schon ansprechen kann, bevor die Grenzwertstufe 43 wieder zurückgefallen ist. Hierdurch wird eine Lücke im Ausgangssignal des ODER-Gatters 44 beim Nulldurchgang des d(Δn)/dt Signals vermieden. Dies könnte auch - alternativ - durch eine zusätzliche Abfallverzögerung der Grenzwertstufe 43 bei Wegfall der Elemente 50 und 51 erreicht werden. Durch die Verzögerungszeit des 2. Zeitgliedes 47 kann der Schmitt-Trigger 52 erst ansprechen, wenn die Grenzwertstufe 43 um diese Mindestzeit eingeschaltet hatte; dadurch bleiben kurzzeitige Störungen, die keine wirklichen Schleuderansätze darstellen, hier ohne weitere Wirkung. Die Rückfallzeit des 1. Zeitgliedes 46 sorgt dafür, daß der Schmitt-Trigger 52 während einer angemessenen Dauer des negativen Drehzahldifferenz-Signals d(Δn)/dt wirksam bleiben kann, wenn die Grenzwertstufe 43 schon wieder ausgeschaltet hat.

Damit erhält der Schmitt-Trigger 52 das Zusatzsignal für den Integrator 13 solange aufrecht, bis das (negative) d( Δ n)/dt Signal wieder die Triggerschwelle unterschreitet.

Damit ist der Badsatz wieder in den stabilen Schlupfbereich zurückgeführt und wird wieder zum nächsten Spiel beschleunigt. Strichpunktiert umrahmt sind in Fig. 2 die zur Durchführung des Betriebes mit erhöhtem Schlupf zusätzlich benötigten Einrichtungen hervorgehoben. Dazu gehört der Schalter 101, der für erhöhten Schlupfbetrieb geöffnet wird, wodurch die Pseudo-Laufachse 13 nicht mehr in den stabilen Schlupfbereich zurückgeführt werden kann. Ersatzweise kann dafür auch die Verstärkung im Proportionalverstärker 34 herabgesetzt werden, wodurch das Zusatzsignal am Integrator 13 kleiner wird, was zur Rückführung in den stabilen Schlupfbereich dann nicht mehr ausreicht. Der Übergang in den größeren Schlupf geht dann langsamer vor sich. Damit der Schlupf dieses Radsatzes nicht unkontrolliert immer größer wird, wird er mit Hilfe der Funkionsgruppen 102 bis 106 von den übrigen Radsätzen kontrolliert, von denen mindestens einer nicht mit erhöhtem Schlupf gefahren wird. Ohne die erfindungsgemäße Ergänzung wäre der Eingang des Differenzverstärkers 14 mit der gemessenen Radsatzdrehzahl verbunden, wodurch die Pseudo-Laufachse 13 nicht schneller werden kann als der zugehörige Radsatz (im Betrieb "Fahren"; beim Bremsen umgekehrt). Für den Betrieb mit erhöhtem Schlupf ist der Eingang des Differenzverstärkers 14 statt dessen mit einer Minimalauswahl aus einem Auswahlglied 102 verbunden, das aus der eigenen Radsatzdrehzahl, z.B. n1, und den übrigen Radsatzdrehzahlen, z.B. n2 bis n4, nur den Minimalwert über eine Minimalwertstufe 103 weiterleitet, verbunden, wobei dieser Wert in einer Additionsstelle 105 noch um einen passend gewählten Schlupfbetrag erhöht wurde. Hierdurch kann die Pseudo-Laufachse 13 nicht mehr an die eigene Radsatzdrehzahl anlaufen, wenn diese größer wird als die Drehzahl eines nichtschlüpfenden Radsatzes zuzüglich des Schlupfbetrages Δ nₛₒₗₗ. Letztere Drehzahl nimmt jetzt die Pseudo-Laufachse 13 an. Der Radsatz kann dabei nur so schnell werden, bis sich aus der Differenz dieser Pseudo-Laufachsgeschwindigkeit mit der dem Kraftschluß auf der Schiene passenden Drehmomentreduzierung ein Gleichgewichtszustand ergibt.

Das ist der Fall bei etwas größerer Differenz als Δvₛₒₗₗ, zu dem nicht im Schlupfbetrieb befindlichen Radsatz. Δvₛₒₗₗ muß, dies berücksichtigend - passend bemessen werden.

Diese zusätzliche Anordnung kann auch im nichtschlüpfenden Betrieb des Radsatzes (Schalter 101 geschlossen) eingeschaltet bleiben; dann ist die zugehörige Radsatzdrehzahl kleiner als die der übrigen Radsätze + Δvₛₒₗₗ und die Anordnung verhält sich so, als wäre die Radsatzdrehzahl wieder direkt mit dem "-"Eingang des Differenzverstärkers 14 verbunden. Im Bremsbetrieb kehren sich die Polaritäten der Differenzen um und es ist demgemäß vom Auswahlglied 102 der Maximalwertausgang über Additionsstelle 106 (-Δvₛₒₗₗ) und Maximalwertstufe 104 wirksam.

Die Umschaltung auf den Betriebsmodus mit großem Schlupf kann allein durch Ausschalten des Schalters 101 bewerkstelligt werden. Die Rückführung des Radsatzes in den Zustand mit geringem Schlupf durch Schließen des Schalters 101 kann evtl. durch kurzzeitige Erhöhung der Verstärkung in dem Proportionalglied 34 beschleunigt werden. Dadurch wird die Reduzierung der erwarteten Beschleunigung verstärkt und der Integrator 13 kann die Pseudo-Laufachsgeschwindigkeit schneller in den stabilen Radschlupfbereich zurückführen.

Für eine Anordnung mit einem Drehzahlregler, der einem Radsatz die ständig gesteigerte und wieder verminderte Drehzahl einprägt und einem Algorithmus, der die Führungsgröße dieses Reglers in Abhängigkeit vom Überschreiten der Kraftschlußgrenze (bzw. Unterschreiten der Antriebs-/Bremskraft) steuert - auch Suchalgorithmus genannt - (z.B DE-PS 39 29 497) kann die Umschaltung folgendermaßen erfolgen:

Der Führungsgrößeneingang des Drehzahlreglers wird vom Suchalgorithmus abgetrennt und mit einer an einem der anderen nicht in den größeren Schlupf gesteuerten Radsätze gemessenen Drehzahl, der der Schlupfbetrag hinzuaddiert wurde, als Referenzgeschwindigkeit verbunden.

Durch unterschiedliche Bemessung der schlupfbestimmenden Vorgabe Δvₛₒₗₗ kann man die in den Schlupfbetrieb geschalteten Radsätze mit verschiedenen Schlupfgeschwindigkeiten betreiben, beispielsweise, um durch besonders großen Schlupf des vorauslaufenden Radsatzes die bekannte Putzwirkung auf nassen oder fremdschichtbehafteten Schienen auszunutzen.

## Patentansprüche

1. Verfahren zur Regelung der Antriebs- und/oder Bremskraft der Räder eines Fahrzeuges, insbesondere der Treibräder eines laufachsenlosen Schienentriebfahrzeugs, auf optimalen Kraftschluß, bei dem die Räder eng um das Maximum der Kraftschluß-Schlupf-Charakteristik des Rad-Schiene-Kontaktes pendelnd geführt werden, entweder durch fortgesetzes Steigern und Wiederzurücknehmen der Antriebs-/Bremskraft, wobei das Überschreiten des Maximums der Kraftschluß-Schlupf-Charakteristik, d.h. der Übergang in den instabilen Schlupfbereich durch einsetzende stärkere Beschleunigung/Verzögerung erkannt wird, oder durch Steigern und Zurücknehmen der Beschleunigung für eine eingeprägte Drehzahl, wobei das Überschreiten des Maximums der Kraftschluß-Schlupfcharakteristik d.h. der Übergang in den instabilen Schlupfbereich am Absinken der Antriebs-/Bremskraft erkannt wird
**dadurch gekennzeichnet**,
daß jeweils nur ein Teil der Räder/Radsätze des Fahrzeuges auf optimalen maximalen Kraftschluß geregelt wird, während die übrigen einer gewollten Radschlupfregelung unterliegen, wobei die gemessene Radgeschwindigkeit/-Drehzahl an den Rädern/Radsätzen mit optimalem Kraftschluß als Referenzgeschwindigkeit dient, auf die nach Addition eines gewollten Schlupfbetrages die Radgeschwindigkeit/-Drehzahl der übrigen Räder/Radsätze geregelt wird.

2. Verfahren nach Anspruch 1,
**dadurch gekennzeichnet**,
daß eine fortgesetzte, beispielsweise zyklische Vertauschung der Radsätze mit erhöhtem und kleinem Schlupf erfolgt.

3. Verfahren nach Anspruch 1,
**dadurch gekennzeichnet**,
daß ein oder mehrere vorlaufende Radsätze mit erhöhtem Schlupf gefahren werden, solange die Kraftschlußgrenze überschritten ist und mindestens einer der nachlaufenden Radsätze zum Drehzahlvergleich mit kleinem Schlupf.

4. Verfahren nach einem der vorhergehenden Ansprüche,
**dadurch gekennzeichnet**,
daß der Betriebsmodus mit dem erhöhten Radschlupf vom Triebfahrzeugführer ein.- und ausschaltbar ist.

5. Verfahren nach einem der vorhergehenden Ansprüche,
**dadurch gekennzeichnet**,
daß der Betriebsmodus mit dem erhöhten Radschlupf sich automatisch einschaltet, wenn nahezu der maximale Zugkraftsollwert (z.B. ≧ 95%) vorgegeben ist und/oder die Regelung die Zugkraft wegen unzureichenden Kraftschlusses länger als eine Mindestzeit um mehr als einen bestimmten Betrag (z.B. 10 %) reduziert hat.

6. Verfahren nach einem der vorhergehenden Ansprüche 1 bis 5,
für eine Anordnung mit einem Integrator als Pseudo-Laufachse, bei der jeweils die Differenz der Ausgangsgröße des Integrators und der Drehzahl einer zugeordneten Treibachse als Maß des Radschlupfes dient und zur Reduzierung des Antriebs- oder Bremsmomentes ausgewertet wird und jeweils über die 1. zeitliche Ableitung der Drehzahldifferenz der Übergang in den instabilen Schlupfbereich anhand der einsetzenden stärkeren Beschleunigung erfaßt und beim Auslösen einer Grenzwertstufe dem Integrator eine zusätzliche, dem zugeführten Sollwert für die Beschleunigung oder Verzögerung entgegenwirkenden Eingangsgröße bis zum Rücklauf in den stabilen Schlupfbereich aufgeschaltet wird,
**dadurch gekennzeichnet**,
daß die ausgewählten Räder/Radsätze dadurch in den Schlupfbetrieb geführt werden, daß die Reduzierung der erwartenden Beschleunigung am Pseudo-Laufachsintegrator (13) abgeschaltet oder auf einen kleinen Restbetrag vermindert wird.

7. Verfahren nach Anspruch 6,
**dadurch gekennzeichnet**,
daß von den nicht in den Betrieb mit erhöhtem Schlupf gesteuerten Radsätzen oder auch allen Radsätzen der Minimalwert (im Bremsbetrieb Maximalwert) der Drehzahlen gebildet wird und daß dieser Wert ggf. gefiltert und um einen gewollten Schlupfbetrag und/oder Toleranzbetrag des Raddurchmessers vermehrt (im Bremsbetrieb vermindert) in einer Minimalauswahl mit der jeweils eigenen Raddrehzahl (im Bremsbetrieb Maximalauswahl) als oberer (im Bremsbetrieb unterer) Anlaufwert für den Pseudo-Laufachsintegrator (13) verwendet wird.

8. Verfahren nach einem der vorhergehenden Ansprüche 1 bis 5,
für eine Anordnung mit Drehmomentregelung und überlagerter Drehzahlregelung, bei der eine Auswertung des Drehmomentsollwertes mit Hilfe eines Maximalwertspeichers und einer Suchlogik erfolgt, wobei bei Anstieg des Drehmomentsollwertes der Maximalwertspeicher vom Drehmomentsollwert mitgeführt und bei Abfall der zuletzt erreichte maximale Drehmomentsollwert im Speicher erhalten bleibt und daß die Differenz zwischen dem Drehmomentsollwert und dessen Maximalwert die Eingangsgröße für die Suchlogik bildet, die bei Überschreitung eines Eingangsschwellwertes abwechselnd ein komplementäres binäres Signal "Beschleunigungsfreigabe" oder "Beschleunigungsreduktion" ausgibt,
**dadurch gekennzeichnet**,
daß der Drehzahlregler des in den erhöhten Schlupf zu steuernden Radsatzes von seinem Suchalgorithmus abgetrennt wird und statt dessen die Drehzahl oder den Drehzahlsollwert eines der anderen nicht in den erhöhten Schlupf gesteuerten Radsätze oder deren Minimalwert,um einen gewollten Schlupfbetrag erhöht (im Bremsbetrieb vermindert), als Drehzahlsollwert für den in den erhöhten Schlupf zu steuernden Radsatz zugeführt erhält.

## Claims

1. Method of regulating the drive force and/or braking force of the wheels of a vehicle, especially the drive wheels of a carrying-axle-free track drive vehicle, to optimal friction coupling, in which the wheels are guided to oscillate closely about the maximum of the friction couple and slip characteristic of the wheel-to-rail contact either by continuous increase and withdrawal again of the drive force and braking force, wherein the exceeding of the maximum of the friction couple and slip characteristic i.e. the translation into the non-stable slip range, is recognised by stronger acceleration/deceleration setting in, or by increase and withdrawal of the acceleration for a load-dependent rotational speed, wherein the exceeding of the maximum of the friction couple and slip characteristic, i.e. the transition into the non-stable slip range, is recognised at the dropping of the drive force or braking force, characterised thereby that each time only a part of the wheels or wheel sets of the vehicle is regulated to optimal maximum friction couple, while the remainder lie below an intended wheel slip regulation, wherein the measured wheel velocity/wheel rotational speed at the wheels or wheel sets with optimal friction coupling serves as reference speed to which the wheel velocity/wheel rotational speed of the remaining wheels or wheel sets is regulated after addition of an intended slip amount.

2. Method according to claim 1, characterised thereby that a continuous, for example, cyclic change of the wheel sets with increased slip and small slip takes place.

3. Method according to claim 1, characterised thereby that one or more leading wheel sets are driven with increased slip for as long as the friction couple limit is exceeded and at least one of the trailing wheel sets is driven with small slip for rotational speed compensation.

4. Method according to one of the preceding claims, characterised thereby that the operating mode with the increased wheel slip can be switched on and off by the drive vehicle driver.

5. Method according to one of the preceding claims, characterised thereby that the operating mode with the increased wheel slip is automatically switched on when almost the maximum tractive force target value (for example equal to or greater than 95%) is preset and/or the regulation of the tractive force has reduced longer than a minimum time by more than a determined amount (for example 10%) due to insufficient friction coupling.

6. Method according to one of the preceding claims 1 to 5, for an arrangement with an integrator as pseudo carrying axle, in which each time the difference of the output magnitude of the integrator and the rotational speed of an associated drive axle serves as a measure of the wheel slip and is evaluated for reduction of the drive moment or braking moment and each time the transition into the non-stable slip range is detected by way of the first time derivative of the rotational speed difference by reference to the stronger acceleration setting in and on triggering of a limit value stage an additional input magnitude, which counteracts the supplied target value for the acceleration or deceleration, is applied to the integrator until return into the stable slip range, characterised thereby that the selected wheels or wheel sets are led into the slip range thereby that the reduction in the expected acceleration is switched off at the pseudo carrying axle integrator (13) or reduced to a small residual amount.

7. Method according to claim 6, characterised thereby that minimum value (in braking operation maximum value) of the rotational speeds is formed from the wheel sets not controlled in operation with increased slip or also all wheel sets and that this value is in a given case filtered and increased (in braking operation reduced) by an intended slip amount and/or tolerance amount of the wheel diameter in a minimum selection with the respective own wheel rotational speed (in braking operation maximum selection) as upper (in braking operation lower) starting value for the pseudo carrying axle integrator (13).

8. Method according to one of the preceding claims 1 to 5, for an arrangement with torque regulation and superimposed rotational speed regulation, in which an evaluation of the torque signal value takes place with the aid of a maximum value store and a search logic, wherein on increase of the torque target value the maximum value store is carried along by the torque target value and, on decrease, the last attained maximum torque target value remains kept in the store and that the difference between the torque target value and the maximum value thereof forms the input magnitude for the search logic, which on exceeding of an input threshold value delivers alternately a complementary binary signal "acceleration release" or "acceleration reduction", characterised thereby that the rotational speed regulator of the wheel set to be controlled in the increased slip is separated out and instead thereof the rotational speed or the rotational speed target value of one of the other wheel sets not controlled in increased slip on the minimum value thereof, increased by an intended slip amount (in braking operation reduced), gets supplied as rotational speed target value for the wheel set to be controlled in increased slip.

## Revendications

1. Procédé de régulation de la force motrice et/ou de la force de freinage exercée sur les roues d'un véhicule, en particulier sur les roues motrices d'un véhicule moteur sur rails, sans essieu non moteur, en vue de l'adhérence optimale dans le cas duquel les roues sont conduites en oscillant étroitement autour du maximum de la caractéristique adhérence-glissement du contact roue-rail, soit par croissance et retour à valeur antérieure, de façon continue, de la force motrice de la force de freinage, le dépassement du maximum de la caractéristique adhérence-glissement, c'est-à-dire le passage dans la zone de glissement instable étant connu par une accélération/une décélération plus forte qui se produit, soit par croissance et retour à valeur antérieure de l'accélération pour une vitesse de rotation définie, le dépassement du maximum de la caractéristique adhérence-glissement, c'est-à-dire le passage dans la zone de glissement instable, étant connu par l'abaissement de la force motrice/de la force de freinage,
caractérisé
par le fait que l'on ne régule chaque fois qu'une partie des roues/des essieux du véhicule pour obtenir une adhérence maximale optimale, tandis que les autres roues sont soumises à une régulation voulue du glissement des roues, la vitesse des roues/la vitesse de rotation des roues mesurée sur les roues/sur les essieux à adhérence optimale servant de vitesse de référence sur laquelle, après addition d'une valeur voulue du glissement, on régule la vitesse des roues/la vitesse de rotation des roues des autres roues/des autres essieux.

2. Procédé selon la revendication 1,
caractérisé
par le fait qu'il se fait un échange continu, par exemple cyclique, entre les essieux à glissement accru et ceux à faible glissement.

3. Procédé selon la revendication 1,
caractérisé
par le fait qu'un ou plusieurs essieux avant marchent avec glissement accru, aussi longtemps que la limite d'adhérence est dépassée et qu'au moins l'un des essieux arrière marche avec un faible glissement en vue de comparer les vitesses de rotation.

4. Procédé selon l'une des revendications précédentes,
caractérisé
par le fait que le conducteur du véhicule moteur peut mettre en circuit et hors circuit le mode d'exploitation avec glissement de roue accru.

5. Procédé selon l'une des revendications précédentes,
caractérisé
par le fait que le mode d'exploitation avec glissement de roue accru se met automatiquement en circuit lorsque c'est presque la valeur prescrite maximale de la force de traction (par exemple ≥ 95%) qui est prescrite et/ou que, par suite d'une adhérence insuffisante, la régulation a réduit la force de traction de plus d'une valeur déterminée (par exemple 10%) pendant plus longtemps qu'une durée minimale.

6. Procédé selon l'une des revendications précédentes 1 à 5,
pour un dispositif avec un intégrateur comme pseudo-essieu non moteur, dans le cas duquel la différence de la valeur initiale de l'intégrateur et de la vitesse de rotation d'un essieu moteur correspondant sert de mesure du glissement des roues et est traitée pour réduire le moment moteur ou le moment de freinage, dans le cas duquel le passage dans la zone de glissement instable est saisi, à l'aide de l'accélération plus forte qui se produit, au moyen de la dérivée première, en fonction du temps, de la différence des vitesses de rotation, et dans le cas duquel, lors du déclenchement d'un seuil, une valeur supplémentaire, opposée à la valeur prescrite amenée pour l'accélération ou la décélération, est envoyée à l'intégrateur jusqu'au retour dans la zone de glissement stable,
caractérisé,
par le fait que les roues/les essieux choisis sont conduits dans la zone de glissement par le moyen que la réduction de l'accélération à attendre est mise hors circuit sur l'intégrateur servant de pseudo-essieu non moteur (13) ou ramenée à une petite valeur résiduelle.

7. Procédé selon la revendication 6,
caractérisé
par le fait que la valeur minimale (en exploitation en freinage, la valeur maximale) des vitesses de rotation est formée par les essieux qui ne sont pas commandés en exploitation à glissement accru, ou également par tous les essieux, et que l'on emploie cette valeur, éventuellement filtrée et augmentée (en exploitation en freinage, diminuée) d'une valeur voulue du glissement et/ou d'une valeur de tolérance sur le diamètre de la roue, en une sélection minimale (en exploitation en freinage, sélection maximale) avec la vitesse de rotation respectivement propre des roues, comme valeur supérieure (en exploitation en freinage, inférieure) de démarrage pour l'intégrateur (13) servant de pseudo-essieu non moteur.

8. Procédé selon l'une des revendications 1 à 5,
pour une disposition avec régulation du moment de rotation et régulation superposée de la vitesse de rotation superposée, dans le cas duquel il se fait un traitement de la valeur prescrite du moment de rotation à l'aide d'une mémoire de valeur maximale et d'une logique de recherche, procédé dans le cas duquel, lors de la croissance de la valeur prescrite du moment de rotation, c'est la valeur en mémoire de la valeur maximale de la valeur prescrite du moment de rotation qui est amenée et, en cas de décroissance, la valeur prescrite maximale du moment de rotation atteinte en dernier lieu reste en mémoire, et dans le cas duquel la différence entre la valeur prescrite du moment de rotation et sa valeur maximale forme la valeur d'entrée pour le circuit logique de recherche qui, en cas de dépassement d'une valeur de seuil d'entrée, émet alternativement un signal binaire complémentaire "libération de l'accélération" ou "réduction de l'accélération",
caractérisé
par le fait que l'on sépare de son algorithme de recherche le régulateur de vitesse de rotation de l'essieu à commander en glissement accru et qu'à la place on continue à envoyer comme valeur prescrite de la vitesse de rotation pour l'essieu à commander en glissement accru la vitesse de rotation, ou la valeur prescrite de la vitesse de rotation, de l'un des autres essieux non commandés en glissement accru, ou leur valeur minimale, augmentée (en exploitation en freinage, diminuée), d'une valeur voulue du glissement.
